# DEMANDE DE BREVET EUROPEEN

(11) **EP 4 789 840 A1**
(43) Date de publication de la demande: **12.08.2026**
(21) Numéro de dépôt: 25218404.9
(22) Date de dépôt: 25.11.2025
(51) Int. Cl.: B29C 49/42, B65D 21/02, B65D 79/00

(54) **DISPOSITIF D'INVERSION DE L ÉPAULE D'UN RÉCIPIENT COMPORTANT AU MOINS UNE ÉPAULE DÉFORMABLE**

(30) Priorité: 07.02.2025 FR 2501250
(71) Demandeur: Sidel Participations, 76930 Octeville-sur-Mer (FR)
(72) Inventeur: CHOMEL, Nicolas, 76930 OCTEVILLE-SUR-MER (FR); MICHEL, Jocelyn, 76930 OCTEVILLE-SUR-MER (FR); LECOMTE, Frédéric, 76930 OCTEVILLE-SUR-MER (FR)
(74) Mandataire: Sidel Group

(57) **Abrégé**

La présente invention concerne un dispositif pour l'inversion de l'articulation de l'épaule (3) d'un récipient (1) obtenu par soufflage ou par étirage-soufflage à partir d'une ébauche en matière plastique, qui comprend au moins un corps (2), une épaule (3) dans le prolongement dudit corps (2) à une extrémité supérieure de celui-ci, un col (4) dans le prolongement de l'épaule (3), ladite épaule (3) étant articulée entre au moins deux positions stables, à savoir une position dite déployée dans laquelle l'épaule (3) fait saillie du corps (2), et une position dite rétractée dans laquelle l'épaule (3) s'étend au même niveau que l'extrémité supérieure du corps (2) ou est au moins partiellement rentrée dans le corps (2), et un fond (5) à l'extrémité inférieure dudit corps (2) ; ledit dispositif est remarquable en ce qu'il comprend au moins un bâti (100) à travers lequel est apte à s'étendre un convoyeur (102) convoyant des récipients (1) suivant un trajet de circulation depuis une entrée (E) et une sortie (S) et sur lequel est monté un bras (117) portant une courroie (118) tendue entre au moins trois poulies, une poulie menante (119), une poulie menée (120) et une poulie dite d'écrasement (121) s'étendant entre la poulie menante (119) et la poulie menée (120) de telle sorte que la courroie (118) comporte un brin supérieur (118a) et un brin inférieur (118b) qui s'étend au droit du convoyeur (102), ledit brin inférieur (118b) de la courroie (118) présentant un premier segment dit d'écrasement (S1) s'étendant entre la poulie menée (120) et la poulie d'écrasement (121) et formant un angle compris entre 1,5° et 5° par rapport à l'horizontale et un second segment dit de réduction de pression (S2) s'étendant entre la poulie d'écrasement (121) et la poulie menante (119) et formant un angle compris entre - 2° et -7° par rapport à l'horizontale.

## Description

### Domaine technique

La présente invention concerne un dispositif d'inversion de l'épaule d'un récipient comportant au moins une épaule déformable, tel que, par exemple, une bouteille en polyéthylène téréphtalate (PET) et/ou en en polyéthylène téréphtalate recyclé (rPET) potentiellement empilable, comprenant à cet effet un fond et un col sensiblement complémentaires de manière à permettre un empilement stable des récipients.

### Etat de la technique

Il est bien connu de produire des récipients dits empilables. C'est le cas notamment du brevet américain US 2 077 027 qui décrit un récipient empilable, qui comprend un corps et une épaule tronconique rapportée et fixée sur le corps par un bord replié. L'empilement de ce type de récipient est naturellement stable, mais cette stabilité repose en grande partie sur le matériau (métallique) dans lequel est fabriqué le récipient.

Toutefois, il est difficile d'obtenir une telle stabilité lorsque le récipient est obtenu par soufflage (ou étirage soufflage) à partir d'une ébauche (notamment une préforme) en matière plastique tel que du polyéthylène téréphtalate dit PET. En effet, outre le fait que les matières plastiques sont naturellement malléables, les exigences du marché font tendre la production vers un allègement des récipients qui réduit la rigidité desdits récipients.

A cet égard, le document EP 0 698 557 décrit un tel récipient empilable en matière plastique, dont le fond est conformé de manière sensiblement complémentaire au col pour permettre l'empilement. A cet effet, le fond et l'épaule du récipient sont munies sur leur périphérie de surfaces planes d'appui, et le fond est en outre pourvu d'une portion creuse de réception du col d'un récipient sous-jacent.

Néanmoins, la fabrication d'un tel récipient nécessite, pour la réalisation du fond, une quantité substantielle de matière, nécessaire pour conférer au fond une rigidité suffisante, susceptible de conférer à l'ensemble du récipient une bonne tenue mécanique et une bonne stabilité lors de son empilement. De même, une quantité suffisante de matière est nécessaire à la bonne soufflabilité du fond (c'est-à-dire à sa capacité à être correctement formé). A contrario, un allègement inconsidéré du récipient notamment au niveau du fond, est nuisible à la tenue mécanique du récipient et à la stabilité de son empilement.

Afin de remédier à ces inconvénients, on a déjà imaginé un récipient comprenant des moyens permettant de créer une pression positive à l'intérieur du récipient et, in fine, de renforcer ledit récipient. C'est le cas notamment du document WO2007/127337.

Ledit document WO2007/127337 décrit un récipient en plastique comportant une partie supérieure comprenant un goulot prévu pour recevoir une fermeture, une partie inférieure comprenant une embase et une paroi latérale s'étendant entre la partie supérieure et la partie inférieure. La partie supérieure, la partie inférieure et la paroi latérale définissent un volume intérieur destiné à emmagasiner un contenu liquide. Le récipient en plastique comporte en outre un panneau à pression situé sur le récipient et mobile entre une position initiale et une position activée. Le panneau à pression est situé dans la position initiale avant le remplissage du récipient et est placé dans la position activée après le remplissage du récipient. Le déplacement du panneau à pression de la position initiale à la position activée réduit le volume interne du récipient et crée une pression positive à l'intérieur du récipient, ladite pression positive renforçant la paroi latérale.

On connait également le document EP2861499, de la demanderesse, qui décrit un récipient dont l'épaule est articulée entre au moins une position stable dite déployée et une position stable dite rétractée dans laquelle le volume interne du récipient est réduit de manière à créer une pression positive à l'intérieur de ce dernier.

Ledit document EP2861499 décrit un récipient obtenu par soufflage ou étirage soufflage à partir d'une ébauche en matière plastique qui comprend un corps, une épaule dans le prolongement du corps à une extrémité supérieure de celui-ci et un col dans le prolongement de l'épaule, l'épaule étant articulée entre deux positions stables, à savoir une position déployée dans laquelle l'épaule fait saillie du corps et une position rétractée dans laquelle l'épaule est au moins partiellement rentrée dans le corps, l'épaule étant articulée pour pouvoir adopter, outre la position déployée et la position rétractée, une troisième position stable, intermédiaire entre la position déployée et la position rétractée.

La position rétractée, dans laquelle l'empilement peut être réalisé, permet de diminuer la hauteur d'épaule et, par conséquent, le volume d'accueil ménagé dans le fond. De plus, l'épaule étant placée dans sa position rétractée après remplissage et bouchage du récipient, le contenu dudit récipient est mis sous pression et accroit la rigidité de ce dernier. Ainsi, la stabilité de l'empilement de récipients est accrue tout en diminuant la quantité de matière nécessaire pour former le fond.

Toutefois, il est difficile d'obtenir un bon compromis entre la stabilité d'empilement et la légèreté d'un récipient en matière plastique. Par ailleurs, il est désormais demandé de réduire de plus en plus le poids des récipients pour des raisons non seulement économiques, compte tenu de l'augmentation du coût des matières premières, mais également écologiques.

Ainsi, afin d'améliorer la rigidité et la stabilité de l'empilement de récipients dont la quantité de matière, et par conséquent son poids, est la plus faible possible sans pour autant ajouter de gaz additionnel sous pression, tel que de l'azote liquide par exemple, à l'intérieur desdits récipients, la demanderesse a déposé la demande de brevet FR3139322A1 relative à un récipient dont l'épaule est articulée entre au moins deux positions stables, à savoir une position dite déployée dans laquelle l'épaule fait saillie du corps, et une position dite rétractée dans laquelle l'épaule s'étend au même niveau que l'extrémité supérieure du corps ou est au moins partiellement rentrée dans le corps.

Plus précisément, le document FR3139322A1 décrit un récipient obtenu par soufflage ou par étirage-soufflage à partir d'une ébauche en matière plastique, qui comprend un corps, une épaule dans le prolongement dudit corps à une extrémité supérieure de celui-ci, un col dans le prolongement de l'épaule, ladite épaule étant articulée entre au moins deux positions stables, à savoir une position dite déployée dans laquelle l'épaule fait saillie du corps, et une position dite rétractée dans laquelle l'épaule s'étend au même niveau que l'extrémité supérieure du corps ou est au moins partiellement rentrée dans le corps, et un fond à l'extrémité inférieure dudit corps. Ledit fond est articulé à l'extrémité inférieure du corps entre au moins deux positions stables, à savoir une position dite déployée dans laquelle le fond s'étend au même niveau que l'extrémité inférieure du corps ou fait saillie au moins partiellement du corps et une position dite rétractée dans laquelle ledit fond est au moins partiellement rentré dans le corps de telle manière que, lorsque le récipient est rempli et fermé, le passage de la position déployée vers la position rétractée de l'épaule entraîne le passage de la position rétractée vers la position déployée du fond et inversement.

Afin d'inverser l'épaule de ce type de récipient, i.e. de procurer le passage de la position déployée vers la position rétractée de l'épaule, un dispositif adapté est nécessaire. A cet égard, un tel dispositif est décrit dans le document WO2018/073442A1, ledit dispositif étant adapté à l'inversion de l'épaule de bouteilles à remplissage chaud qui usuellement étaient dotées de panneaux sous vide renforçant la bouteille et qui désormais sont dotées d'une rainure périphérique au niveau de l'épaule conçue pour s'effondrer sur elle-même, procurant ainsi une inversion de l'épaule, lorsqu'une force de compression axiale est appliquée à la bouteille.

Ledit document WO2018/073442A1 décrit ainsi un dispositif de remplissage à chaud comprenant une machine de compression conçue pour appliquer une force de compression axiale à un récipient thermoplastique pliable pour liquides, la machine de compression comprenant au moins un corps inférieur ayant une surface conçue pour être une surface d'appui pour la base du récipient ; au moins un corps supérieur conçu pour entrer en contact avec une partie du récipient au-dessus de la rainure périphérique, de telle sorte que le récipient peut être maintenu dans une position verticale par le ou les corps inférieurs et le ou les corps supérieurs ; des moyens d'actionnement pour actionner le ou les corps inférieurs et/ou le ou les corps supérieurs , afin d'appliquer ladite force de compression axiale, agissant le long d'une direction parallèle à l'axe longitudinal du récipient, afin d'amener le côté droit proximal à entrer en contact avec le côté droit distal, réduisant ainsi le volume interne du récipient.

Ce type de dispositif présente néanmoins l'inconvénient de ne pas permettre l'inversion de l'épaule avec efficacité à de très hautes cadences de l'ordre de 80000 bouteilles par heure.

### Divulgation de l'invention

L'un des buts de l'invention est donc de remédier à tout ou partie de ces inconvénients en proposant.

A cet effet, et conformément à l'invention, il est proposé un dispositif pour l'inversion de l'articulation de l'épaule d'un récipient obtenu par soufflage ou par étirage-soufflage à partir d'une ébauche en matière plastique, qui comprend au moins un corps, une épaule dans le prolongement dudit corps à une extrémité supérieure de celui-ci, un col dans le prolongement de l'épaule, ladite épaule étant articulée entre au moins deux positions stables, à savoir une position dite déployée dans laquelle l'épaule fait saillie du corps, et une position dite rétractée dans laquelle l'épaule s'étend au même niveau que l'extrémité supérieure du corps ou est au moins partiellement rentrée dans le corps, et un fond à l'extrémité inférieure dudit corps ; remarquable en ce qu'il comprend au moins un bâti à travers lequel est apte à s'étendre un convoyeur convoyant des récipients suivant un trajet de circulation depuis une entrée et une sortie et sur lequel est monté un bras portant une courroie tendue entre au moins trois poulies, une poulie menante, une poulie menée et une poulie dite d'écrasement s'étendant entre la poulie menante et la poulie menée de telle sorte que la courroie comporte un brin supérieur et un brin inférieur qui s'étend au droit du convoyeur, ledit brin inférieur de la courroie présentant un premier segment dit d'écrasement s'étendant entre la poulie menée et la poulie d'écrasement et formant un angle compris entre 1,5° et 5° par rapport à l'horizontale et un second segment dit de réduction de pression s'étendant entre la poulie d'écrasement et la poulie menante et formant un angle compris entre -2° et - 7° par rapport à l'horizontale.

Par ailleurs, le segment d'écrasement de la courroie est plus long que le segment de réduction de pression de ladite courroie.

De préférence, ledit second segment dit de réduction de pression de la courroie forme un angle de -4,5° par rapport à l'horizontale.

Par ailleurs, le premier segment dit d'écrasement de la courroie forme, de préférence, un angle de 2,5° par rapport à l'horizontale.

De manière avantageuse, ledit dispositif comporte une pluralité de rouleaux à billes solidaires du bras et prenant appui sur la face intérieure du brin inférieur de la courroie au niveau du premier segment d'écrasement et/ou au niveau du second segment de réduction de la pression, les axes desdits rouleaux à billes s'étendant perpendiculairement au bras et à la direction de déplacement du brin inférieur de la courroie.

Selon une variante d'exécution, le dispositif comporte au moins une plaque dite de glissement solidaire du bras et prenant appui sur la face intérieure du brin inférieur de la courroie au niveau du premier segment d'écrasement et/ou au niveau du second segment de réduction de la pression.

Par ailleurs, la poulie menante est entrainée en rotation par un moteur électrique de telle sorte que la vitesse du brin inférieur de la courroie soit sensiblement égale à la vitesse de déplacement du convoyeur, le brin inférieur de la courroie se déplaçant dans la même direction que le convoyeur.

De plus, le bâti comporte un piètement et au moins un cadre vertical sur lequel sont solidarisés deux rails verticaux le long desquels est apte à coulisser un chariot sur lequel est articulé le bras portant la courroie.

De manière avantageuse, le dispositif comporte au moins un capteur apte à mesurer la hauteur des bouchons des récipients.

Ledit capteur est monté à l'extrémité libre d'un bras solidaire du chariot de telle sorte que ledit capteur s'étende au droit du convoyeur au niveau de la sortie de ce dernier.

Par ailleurs, le dispositif comporte des moyens de réglage en hauteur du chariot le long du cadre vertical du bâti sur lequel est articulé le bras portant la courroie, ledit réglage de la hauteur du chariot dépendant de la mesure de la hauteur des bouchons des récipients et/ou de la distance avec le convoyeur effectuée par ledit capteur.

De préférence, le dispositif comporte un système d'escamotage rapide de la courroie en cas de blocage afin de protéger le convoyeur.

Ledit système d'escamotage consiste en un pivot solidaire du chariot et autour duquel est articulé le bras portant la courroie, ledit pivot étant positionné au niveau de l'entrée du convoyeur, et un vérin dont les extrémités libres sont solidaires du bras et du chariot.

De manière avantageuse, au moins la face extérieure de la courroie, i.e. la face de la courroie entrant en contact avec le récipient lors de la phase d'écrasement de l'épaule, est revêtue d'une couche d'un matériau présentant une dureté shore A comprise entre 50 et 80 et, de préférence, comprise entre 60 et 70. Un tel revêtement permet d'augmenter la friction de la courroie sur les bouchons des récipients lors de la phase d'écrasement, i.e. de retournement, de l'épaule des récipients, évitant de faire tomber les récipients.

Ladite couche revêtant la courroie est, de préférence, du polyuréthane thermoplastique faible dureté TPU SM6 FDA.

### Brève description des dessins

D'autres avantages et caractéristiques ressortiront mieux de la description qui va suivre de plusieurs variantes d'exécution, données à titre d'exemples non limitatifs, conforme à l'invention, en référence aux dessins annexés sur lesquels :
[Fig. 1] est une vue en perspective illustrant un récipient dont l'épaule est rétractée par le dispositif suivant l'invention dans une position dite rétractée de l'épaule,
[Fig. 2] est une vue en élévation de la partie supérieure du récipient dans une position déployée de l'épaule,
[Fig. 3] est une vue en élévation de la partie supérieure du récipient dans une position rétractée de l'épaule,
[Fig. 4] est une vue de face partielle du dispositif pour l'inversion de l'articulation de l'épaule d'un récipient, suivant l'invention,
[Fig. 5] est une vue en perspective du dispositif pour l'inversion de l'articulation de l'épaule d'un récipient, suivant l'invention,
[Fig. 6] est une vue de face du dispositif pour l'inversion de l'articulation de l'épaule d'un récipient, suivant l'invention,
[Fig. 7] est une vue de côté du dispositif pour l'inversion de l'articulation de l'épaule d'un récipient, suivant l'invention,
[Fig. 8] est une vue de dessus du dispositif pour l'inversion de l'articulation de l'épaule d'un récipient, suivant l'invention,
[Fig. 9] est une vue de face partielle du dispositif pour l'inversion de l'articulation de l'épaule d'un récipient, suivant l'invention.

### Mode de réalisation de l'invention

Dans la suite de la description, les mêmes références numériques désignent les mêmes éléments. Par ailleurs, les différentes vues ne sont pas nécessairement tracées à l'échelle

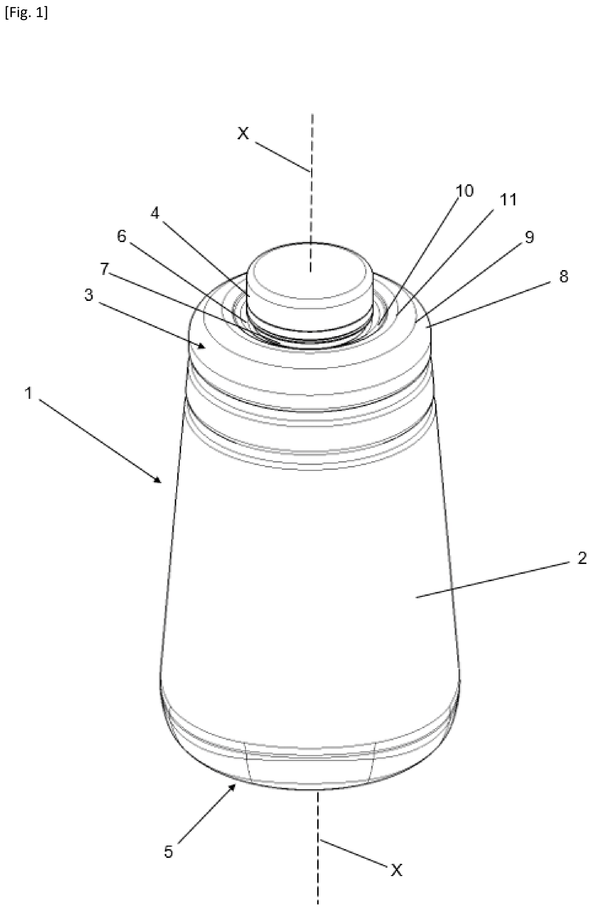

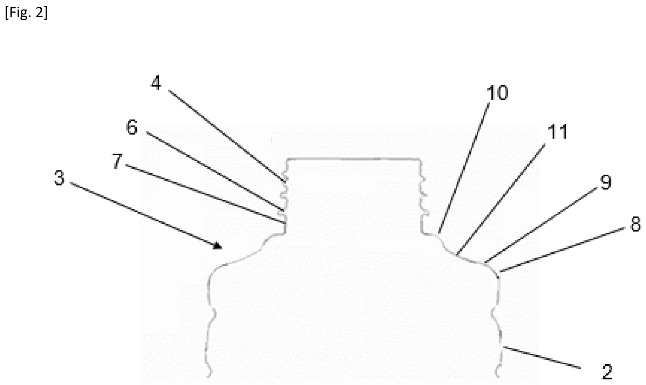

On a représenté sur les figures 1 à 3 un récipient 1 obtenu par soufflage, ou par étirage soufflage, à partir d'une ébauche en matière plastique, et dont l'épaule est inversée par le dispositif suivant l'invention qui sera décrit plus en détail un peu plus loin. Ladite ébauche est, par exemple, une préforme mais il peut également s'agir d'un récipient intermédiaire ayant subi une première opération transitoire de soufflage.

En référence aux figures 1 à 3, ledit récipient 1 comprend un corps 2 de forme sensiblement tronconique qui s'étend selon axe principal X, ledit axe principal X étant vertical, le récipient 1 étant usuellement représenté en position verticale. On observera que le corps 2 n'est pas nécessairement symétrique de révolution autour de son axe principal X. En effet, il pourrait être à section transversale circulaire, telle que cylindrique, ou à section transversale carrée avec des arrêtes de forme quart ronde, i.e. arrondie aux coins, ou non sans pour autant sortir du cadre de l'invention.

Ledit récipient 1 comprend également une épaule 3 dans le prolongement du corps 2 à une extrémité supérieure de celui-ci, un col 4 dans le prolongement de l'épaule 3, et un fond 5 dans le prolongement du corps 2 à une extrémité inférieure. Ledit col 4 présente, au voisinage de sa jonction avec l'épaule 3, une collerette 6 qui est déjà présente à l'extrémité ouverte de l'ébauche et permettant la suspension de ladite ébauche à diverses étapes de fabrication du récipient 1. Par ailleurs, entre la collerette 6 et l'épaule 3, le récipient 1 présente une section 7 sous col, cylindrique de révolution autour de l'axe principal X, ménageant un espace suffisant pour accueillir un organe de préhension du récipient 1, tel qu'une pince par exemple.

Ladite épaule 3 comprend une section périphérique 8, se présentant sous la forme d'une bande relativement étroite de matière, i.e. une bande de largeur comprise entre 0,5 et 25 mm, la largeur dépendant notamment des dimensions du récipient 1, qui s'étend depuis un bord externe et qui définit une première articulation 9 dite externe de l'épaule 3 par rapport au corps 2, à une jonction entre le corps 2 à l'extrémité supérieure de celui-ci jusqu'à un bord interne concentrique du bord externe, ledit bord interne définissant une seconde articulation 10 dite interne, d'une section centrale 11 de l'épaule 3 par rapport à la section périphérique 8. La section centrale 11 de l'épaule 3 est sensiblement tronconique et s'étend depuis l'articulation interne 10 de la section périphérique 8 jusqu'à la section sous col 7.

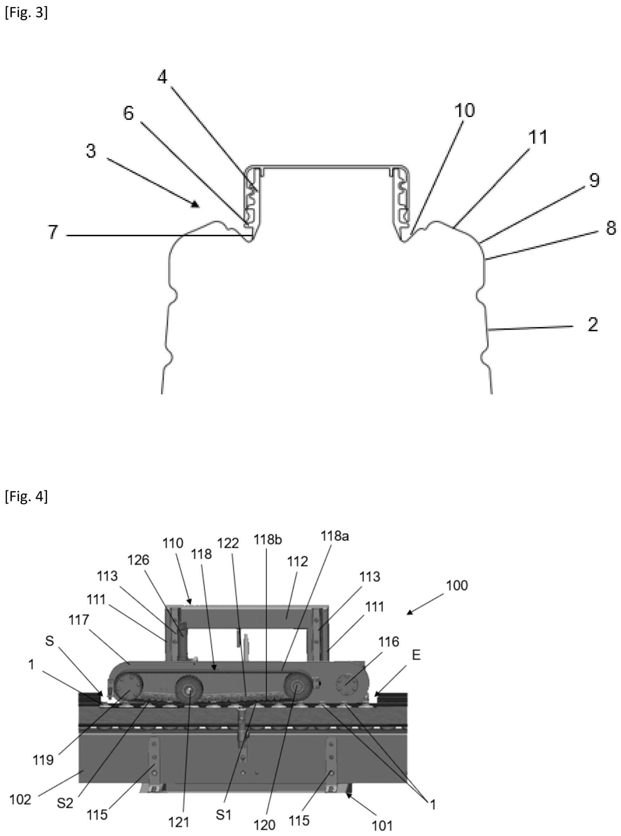

Les articulations externe 9 et interne 10 confèrent à l'épaule 3 la faculté d'adopter deux positions stables, à savoir une position dite rétractée, représentée sur les figures 1 et 3, dans laquelle l'épaule 3 est au moins partiellement rentrée dans le corps 2, la rétraction de l'épaule se faisant vers le fond 5, le long de l'axe principal X, et la section périphérique 8 et la section centrale 11 s'étendant toutes deux en inclinaison, c'est-à-dire que leur conicité pointe en direction du col 4, i.e. vers le haut, et vers l'axe principal X ; et une position dite déployée, représentée à la figure 3, dans laquelle l'épaule 3 fait saillie du corps 2, la section périphérique 8 et la section centrale 11 s'étendant toutes deux en inclinaison, c'est-à-dire que leur conicité pointe en direction du col 4, i.e. vers le haut, vers l'axe principal X.

On observera que la position déployée (figure 3) est venue de formage, c'est-à-dire que c'est dans cette position déployée que le récipient 1 est formé. C'est aussi dans cette position déployée que le récipient 1 est rempli et bouché.

Le passage de l'épaule 3 de la position déployée, position dans laquelle le récipient est rempli puis bouché avec un bouchon, à la position rétractée s'effectue par retournement de la section centrale 11 autour de l'articulation interne 10 de l'épaule 3 en exerçant une pression vers le bas sur le bouchon fermant le col 4. L'orientation de la section périphérique 8 demeure sensiblement inchangée et le col 4 est animé d'un mouvement de translation le long de l'axe principal X du récipient 1 dirigé vers le bas permis par un pivotement de la section centrale 11 par rapport au col 4 autour de l'articulation externe 9. Le récipient 1 étant rempli, la rétractation de l'épaule 3 provoque une mise sous pression du contenu du récipient 1. Par ailleurs, dans cet exemple particulier de réalisation, dans la position rétractée de l'épaule 3, la hauteur du récipient 1 est inférieure à la hauteur dudit récipient 1 lorsque l'épaule 3 est en position déployée.

Afin d'exercer cette pression vers le bas sur le bouchon fermant le col 4 pour procurer le retournement de la section centrale 11 autour de l'articulation interne 10 de l'épaule 3, i.e. d'inverser l'épaule 3, un dispositif 100 pour l'inversion de ladite articulation de l'épaule suivant l'invention est utilisé.

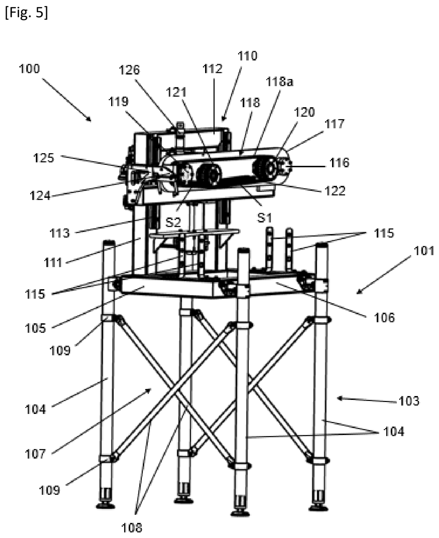

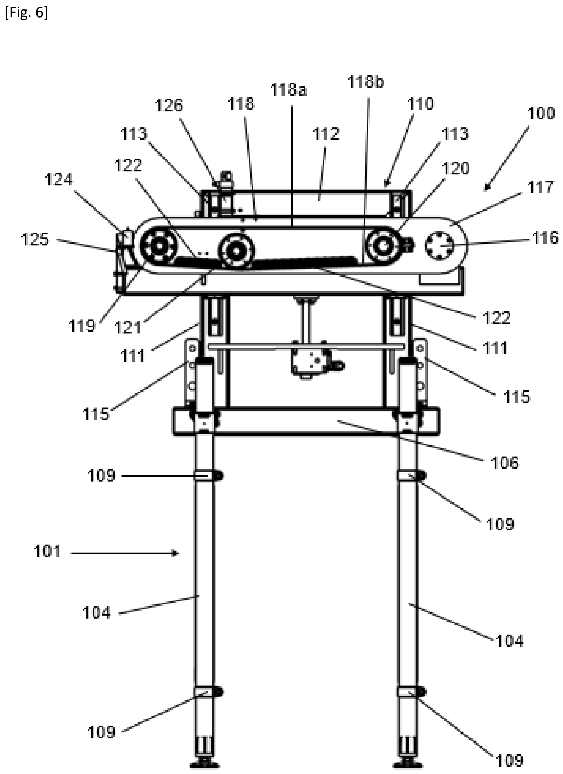

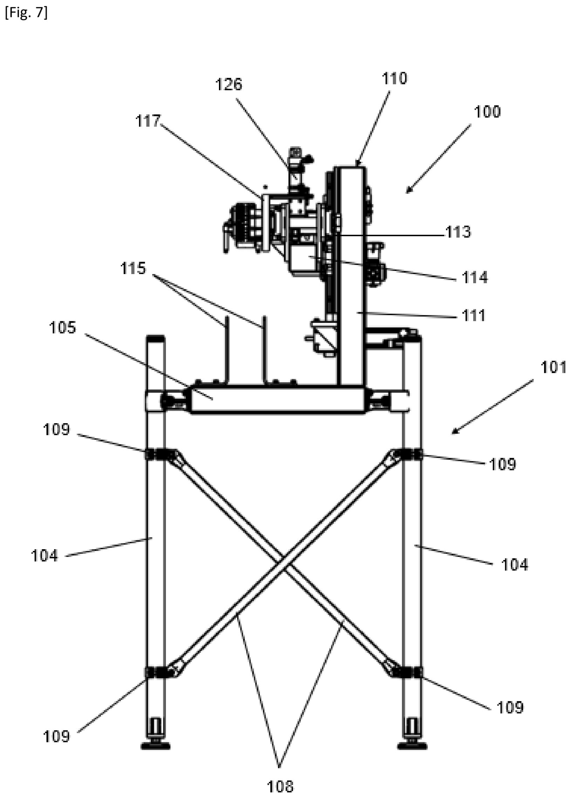

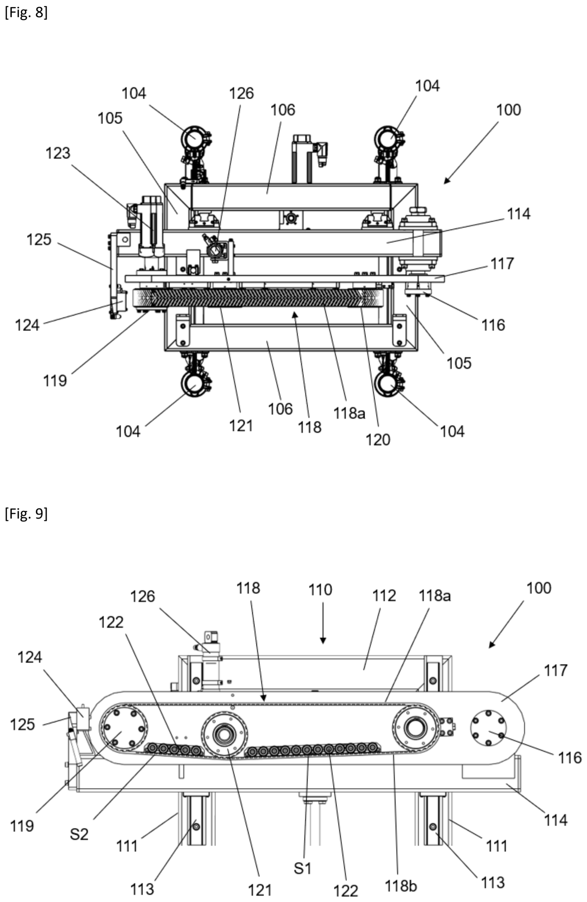

Ledit dispositif 100 pour l'inversion de l'articulation de l'épaule du récipient, en référence aux figures 4 à 9, comprend au moins un bâti 101 à travers lequel est apte à s'étendre un convoyeur 102 convoyant des récipients 1, tels que décrits précédemment, suivant un trajet de circulation depuis une entrée (E) et une sortie (S).

Ledit bâti 101 est constitué d'un piètement 103 comprenant quatre pieds 104 tubulaires reliés, à proximité de leur extrémité supérieure, par deux traverses 105 et deux longerons 106, chaque paire de pieds 104 étant renforcée par des croisillons 107 constitués de barres métalliques 108 munies à leurs extrémités libres de brides de serrage 109 en prise avec les pieds 104 tubulaires. Par ailleurs, ledit bâti 101 comporte un cadre vertical 110 constitué de deux montants 111 s'étendant depuis un longeron 106 du piètement 101, les extrémités supérieures desdits montants 111 étant reliées par un longeron supérieur 112. Sur les montants 111 du cadre vertical 110 sont solidarisés deux rails 113 verticaux le long desquels est apte à coulisser un chariot 114.

Afin de permettre la solidarisation du convoyeur 102, de préférence un convoyeur à bande, sur ledit bâti 101, chaque traverse 105 du piètement 101 comporte une paire de pattes 115 verticales, l'écartement entre les pattes 115 de chaque paire correspondant à la largeur dudit convoyeur 102.

Il est bien évident que le convoyeur 102 à bande pourra être substitué par tout autre type de convoyeur bien connu de l'homme du métier sans pour autant sortir du cadre de l'invention.

Par ailleurs, sur ledit chariot 114 est monté, autour d'un pivot 116, ledit pivot s'étendant au droit de l'entrée (E), un bras 117 portant une courroie 118 tendue entre trois poulies, une poulie menante 119, une poulie menée 120 et une poulie dite d'écrasement 121 s'étendant entre la poulie menante 119 et la poulie menée 120 de telle sorte que la courroie 118 comporte un brin supérieur 118a et un brin inférieur 118b qui s'étend au droit dudit convoyeur 102 qui s'étend sensiblement horizontalement,

Ledit brin inférieur 118b de la courroie présente un premier segment dit d'écrasement S1 qui s'étend entre la poulie menée 120 et la poulie d'écrasement 121 en formant un angle compris entre 1.5° et 5° par rapport à l'horizontale et un second segment dit de réduction de pression S2 qui s'étend entre la poulie d'écrasement 121 et la poulie menante 119 en formant un angle compris entre -2° et -7° par rapport à l'horizontale.

Dans cet exemple particulier de réalisation, ledit premier segment dit d'écrasement S1 de la courroie 118 forme, de préférence, un angle de 2,5° par rapport à l'horizontale et le second segment dit de réduction de pression S2 de la courroie 118 forme, de préférence, un angle de -4,5° par rapport à l'horizontale.

De manière avantageuse, ledit dispositif suivant l'invention comporte une pluralité de rouleaux à billes 122 solidaires du bras 117 et prenant appui sur la face intérieure du brin inférieur 118b de la courroie 118 au niveau du premier segment d'écrasement S1 et/ou au niveau du second segment de réduction de la pression S2, les axes desdits rouleaux à billes 122 s'étendant perpendiculairement au bras 117 et à la direction de déplacement du brin inférieur 118b de la courroie 118.

Selon une variante d'exécution, non représentée sur les figures, la pluralité de rouleaux à billes 122 solidaires du bras 117 et prenant appui sur la face intérieure du brin inférieur 118b de la courroie 118 au niveau du premier segment d'écrasement S1 et/ou au niveau du second segment de réduction de la pression S2 pourra être substituée par une plaque dite de glissement solidaire du bras 117 et prenant appui sur la face intérieure du brin inférieur 118b de la courroie 118.

Par ailleurs, la poulie menante 119 est entrainée en rotation par un moteur électrique 123 solidaire du bras 117 de telle sorte que la vitesse du brin inférieur 118b de la courroie 118 soit sensiblement égale à la vitesse de déplacement du convoyeur 102 à bande, le brin inférieur 118b de la courroie 118 se déplaçant dans la même direction que le convoyeur 102. A cet égard, des moyens de synchronisation de la vitesse du brin inférieur 118b de la courroie 118 avec la vitesse du convoyeur 102 pourront être prévus afin d'adapter la vitesse du brin inférieur 118b de la courroie 118 avec celle du convoyeur en cas de variation de la cadence, la vitesse du convoyeur 102 pouvant être diminuée ou augmenter lors dudit changement de cadence.

De manière avantageuse, le dispositif comporte au moins un capteur 124 apte à mesurer la hauteur des bouchons des récipients 1 circulant sur le convoyeur 102 et/ou à mesurer la distance avec le convoyeur 102. Ledit capteur 124 est, par exemple, solidaire d'une équerre 125 solidaire du chariot 114 et s'étendant en aval du bras 117, c'est-à-dire au droit de la sortie (S) du convoyeur 102. Ledit capteur 124 pourra consister dans tout capteur de mesure de distance bien connu de l'homme du métier.

Par ailleurs, le dispositif comporte avantageusement des moyens de réglage en hauteur du chariot 114 le long du cadre vertical 110 du bâti 101 sur lequel est articulé le bras 117 portant la courroie 118, ledit réglage de la hauteur du chariot 114 dépendant de la mesure de la hauteur des bouchons des récipients 1 effectuée par ledit capteur 124 et/ou de la mesure de la distance avec le convoyeur 102.

De plus, de manière avantageuse, le dispositif comporte également un système d'escamotage rapide de la courroie 118 en cas de blocage afin de protéger le convoyeur 102 notamment.

Ledit système d'escamotage consiste en le pivot 116 solidaire du chariot 114 et autour duquel est articulé le bras 117 portant la courroie 118, ledit pivot 116 étant positionné au niveau de l'entrée (E) du convoyeur 102, et un vérin 126 dont les extrémités libres sont solidaires du bras 117 et du chariot 114.

Par ailleurs, de manière avantageuse, au moins la face extérieure de la courroie 118, i.e. la face de la courroie 118 entrant en contact avec les récipients 1 et plus précisément entrant en contact avec les bouchons des récipients 1 lors de la phase d'écrasement de l'épaule, est revêtue d'une couche d'un matériau présentant une dureté shore A comprise entre 50 et 80 et, de préférence, comprise entre 60 et 70. Un tel revêtement permet d'augmenter la friction de la courroie 118 sur les bouchons des récipients 1 lors de la phase d'écrasement, i.e. de retournement, de l'épaule des récipients 1, qui, combiné à la pente douce de la section d'écrasement (S1), créé un réel maintien des récipients pendant l'écrasement et, in fine, aide à éviter de faire tomber les récipients.

Il est bien évident que ladite couche de revêtement de la courroie 118 pourra recouvrir toutes les faces de ladite courroie sans pour autant sortir du cadre de l'invention.

Ladite couche revêtant la courroie 118 est, de préférence, du polyuréthane thermoplastique faible dureté TPU SM6 FDA sur une épaisseur d'environ 3mm.

Toutefois, il va de soi que ledit matériau pourra consister dans tout autre matériau présentant une dureté shore A comprise entre 50 et 80 tel que du caoutchouc par exemple, et que la couche de revêtement pourra présenter une épaisseur quelconque sans pour autant sortir du cadre de l'invention.

On comprend bien que, les récipients 1 transportés sur le convoyeur 102 étant dans une position déployée, lesdits récipients 1 étant également remplis et bouchés, arrivent au niveau de l'entrée (E) du convoyeur de telle sorte que le premier segment dit d'écrasement S1 du brin inférieur 118b de la courroie 118 qui s'étend entre la poulie menée 120 et la poulie d'écrasement 121 en formant un angle compris entre -2° et -7° par rapport à l'horizontale procure une force de compression qui retourne la section centrale 11 autour de l'articulation interne 10 de l'épaule 3 du récipient 1 en exerçant une pression vers le bas sur le bouchon fermant le col 4, inversant ainsi l'épaule 3 du récipient 1. L'orientation de la section périphérique 8 demeure sensiblement inchangée et le col 4 est animé d'un mouvement de translation le long de l'axe principal du récipient 1 dirigé vers le bas permis par un pivotement de la section centrale 11 par rapport au col 4 autour de l'articulation externe 9. Le récipient 1 étant rempli, la rétractation de l'épaule 3 provoque une mise sous pression du contenu du récipient 1.

A la sortie du segment d'écrasement S1, l'épaule 3 des récipients 1 est dans la position rétractée et la hauteur du récipient 1 est inférieure à la hauteur dudit récipient 1 lorsque l'épaule 3 est en position déployée. Toutefois, le liquide contenu dans les récipients étant alors sous pression, ladite pression du liquide tend à forcer l'épaule à revenir dans sa position initiale déployée. La section S2 de réduction de la pression, de par la pente faible et inversée du brin inférieur 118b de la courroie 118, permet de réduire la pression du liquide contenu dans les récipients tout en évitant que l'épaule 3 des récipients 1 ne revienne dans sa position déployée, ni ne chute, de sorte que, à la sortie S du convoyeur 102, l'épaule 3 des récipients 1 est dans la position verticale rétractée.

Enfin, il est bien évident que les exemples que l'on vient de donner ne sont que des illustrations particulières en aucun cas limitatives quant aux domaines d'application de l'invention.

## Revendications

1. Dispositif pour l'inversion de l'articulation de l'épaule (3) d'un récipient (1) obtenu par soufflage ou par étirage-soufflage à partir d'une ébauche en matière plastique, qui comprend au moins un corps (2), une épaule (3) dans le prolongement dudit corps (2) à une extrémité supérieure de celui-ci, un col (4) dans le prolongement de l'épaule (3), ladite épaule (3) étant articulée entre au moins deux positions stables, à savoir une position dite déployée dans laquelle l'épaule (3) fait saillie du corps (2), et une position dite rétractée dans laquelle l'épaule (3) s'étend au même niveau que l'extrémité supérieure du corps (2) ou est au moins partiellement rentrée dans le corps (2), et un fond (5) à l'extrémité inférieure dudit corps (2), **caractérisé en ce qu'**il comprend au moins un bâti (100) à travers lequel est apte à s'étendre un convoyeur (102) convoyant des récipients (1) suivant un trajet de circulation depuis une entrée (E) et une sortie (S), ledit convoyeur (102) s'étendant sensiblement horizontalement, et sur lequel est monté un bras (117) portant une courroie (118) tendue entre au moins trois poulies, une poulie menante (119), une poulie menée (120) et une poulie dite d'écrasement (121) s'étendant entre la poulie menante (119) et la poulie menée (120) de telle sorte que la courroie (118) comporte un brin supérieur (118a) et un brin inférieur (118b) qui s'étend au droit du convoyeur (102), ledit brin inférieur (118b) de la courroie (118) présentant un premier segment dit d'écrasement (S1) s'étendant entre la poulie menée (120) et la poulie d'écrasement (121) et formant un angle compris entre 1,5° et 5° par rapport à l'horizontale et un second segment dit de réduction de pression (S2) s'étendant entre la poulie d'écrasement (121) et la poulie menante (119) et formant un angle compris entre -2° et -7° par rapport à l'horizontale.

2. Dispositif suivant la revendication 1 **caractérisé en ce que** le segment d'écrasement (S1) de la courroie (118) est plus long que le segment de réduction de pression (S2) de ladite courroie (118).

3. Dispositif suivant l'une quelconque des revendications 1 ou 2 **caractérisé en ce que** ledit second segment dit de réduction de pression d'écrasement (S2) de la courroie (118) forme un angle de -4,5° par rapport à l'horizontale.

4. Dispositif suivant l'une quelconque des revendications 1 à 3 **caractérisé en ce que** le premier segment dit d'écrasement (S1) de la courroie (118) forme un angle de 2,5° par rapport à l'horizontale.

5. Dispositif suivant l'une quelconque des revendications 1 à 4 **caractérisé en ce qu'**il comporte une pluralité de rouleaux à billes (122) solidaires du bras (117) et prenant appui sur la face intérieure du brin inférieur (118b) de la courroie (118) au niveau du premier segment d'écrasement (S1) et/ou au niveau du second segment de réduction de la pression (S2), les axes desdits rouleaux à billes (122) s'étendant perpendiculairement au bras (117) et à la direction de déplacement du brin inférieur (118b) de la courroie (118).

6. Dispositif suivant l'une quelconque des revendications 1 à 4 **caractérisé en ce qu'**il comporte au moins une plaque dite de glissement solidaire du bras (117) et prenant appui sur la face intérieure du brin inférieur (118b) de la courroie (118) au niveau du premier segment d'écrasement (S1) et/ou au niveau du second segment de réduction de la pression (S2).

7. Dispositif suivant l'une quelconque des revendications 1 à 6 **caractérisé en ce que** la poulie menante (119) est entrainée en rotation par un moteur électrique (123) de telle sorte que la vitesse du brin inférieur (118b) de la courroie (118) soit sensiblement égale à la vitesse de déplacement du convoyeur (102), le brin inférieur (118b) de la courroie (118) se déplaçant dans la même direction que le convoyeur (102).

8. Dispositif suivant l'une quelconque des revendications 1 à 7 **caractérisé en ce que** le bâti (100) comporte un piètement (101) et au moins un cadre vertical (110) sur lequel sont solidarisés deux rails (113) verticaux le long desquels est apte à coulisser un chariot (114) sur lequel est monté le bras (117) portant la courroie (118).

9. Dispositif suivant l'une quelconque des revendications 1 à 8 **caractérisé en ce qu'**il comporte au moins un capteur (124) apte à mesurer la hauteur des bouchons des récipients (1) et/ou de la distance avec le convoyeur (102).

10. Dispositif suivant la revendication 9 **caractérisé en ce que** ledit capteur (124) est monté à l'extrémité libre d'une équerre (125) solidaire du chariot (114) de telle sorte que ledit capteur (124) s'étende au droit du convoyeur (102) au niveau de la sortie (S) de ce dernier.

11. Dispositif suivant l'une quelconque des revendications 8 à 10 **caractérisé en ce qu'**il comporte des moyens de réglage en hauteur du chariot (114) le long du cadre vertical (110) du bâti (100) sur lequel est articulé le bras (117) portant la courroie (118), ledit réglage de la hauteur du chariot (114) dépendant de la mesure de la hauteur des bouchons des récipients effectuée par ledit capteur (124) et/ou de la distance avec le convoyeur (102).

12. Dispositif suivant l'une quelconque des revendications 1 à 11 **caractérisé en ce qu'**il comporte un système d'escamotage rapide de la courroie (118) en cas de blocage afin de protéger le convoyeur (102).

13. Dispositif suivant la revendication 12 **caractérisé en ce que** ledit système d'escamotage consiste en un pivot (116) solidaire du chariot (114) et autour duquel est articulé le bras (117) portant la courroie (118), ledit pivot (116) étant positionné au niveau de l'entrée (E) du convoyeur (102), et un vérin (126) dont les extrémités libres sont solidaires du bras (116) et du chariot (115).

14. Dispositif suivant l'une quelconque des revendications 1 à 13 **caractérisé en ce qu'**au moins la face extérieure de la courroie (118), i.e. la face de la courroie (118) entrant en contact avec le récipient (1) lors de la phase d'écrasement de l'épaule, est revêtue d'une couche d'un matériau présentant une dureté shore A comprise entre 50 et 80 et, de préférence, comprise entre 60 et 70.

15. Dispositif suivant la revendication 14 **caractérisé en ce que** ladite couche revêtant la courroie (118) est du polyuréthane thermoplastique faible dureté TPU SM6 FDA.
